(19) Europäisches Patentamt
European Patent Office
Office européen des brevets

(11) EP 1 635 340 A2

# (12) EUROPEAN PATENT APPLICATION

(43) Date of publication:
**15.03.2006 Bulletin 2006/11**

(51) Int Cl.:
***G11B 7/24*** *(2006.01)*

(21) Application number: **05019469.5**

(22) Date of filing: **07.09.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **14.09.2004 JP 2004266690**

(71) Applicant: **FUJI PHOTO FILM CO., LTD.**
**Minamiashigara-shi**
**Kanagawa (JP)**

(72) Inventors:
- **Inoue, Noriko**
**Odawara,**
**Kanagawa (JP)**
- **Takano, Hiroaki**
**Odawara,**
**Kanagawa (JP)**

(74) Representative: **Grünecker, Kinkeldey, Stockmair & Schwanhäusser Anwaltssozietät**
**Maximilianstrasse 58**
**80538 München (DE)**

## (54) Optical recording medium

(57) An optical recording medium (OM1 or M2) of the present invention is a lamination body having two light transmissive substrates (1 and 2 or 1' and 2') not less than 50 μm in thickness and an optical information recording layer (3 or 3') not less than 100 μm in thickness that is provided between the two light transmissive substrates and is comprised of an optical recording material where information is recorded by recording light, wherein a side edge portion of the lamination body is covered so that edges of the light transmissive substrates and the optical information recording layer are not exposed.

FIG. 2

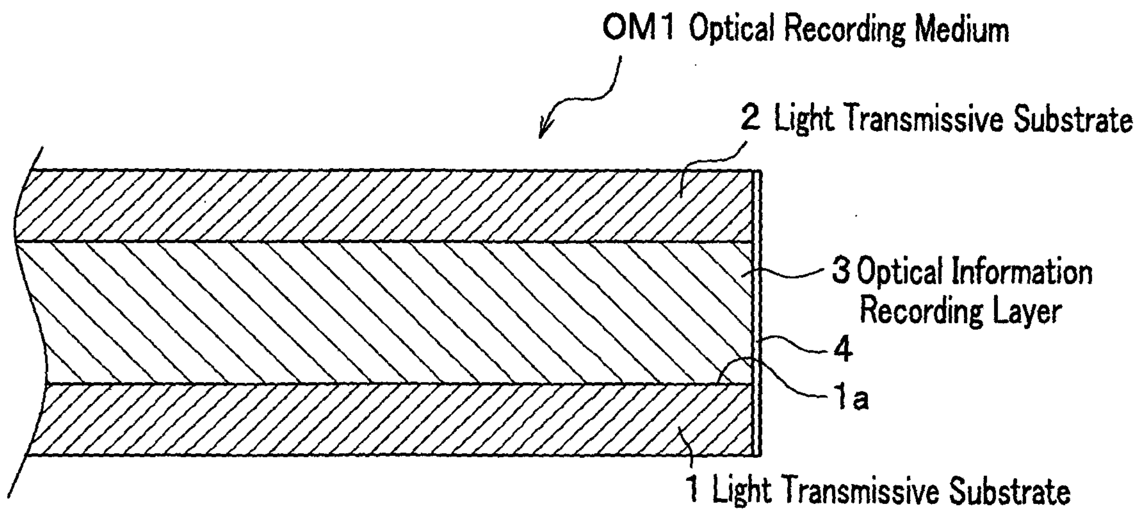


EP 1 635 340 A2

## Description

BACKGROUND OF THE INVENTION

1. FIELD OF THE INVENTION

The present invention relates to an optical recording medium, and particularly, to the optical recording medium for a three-dimensional recording such as a multilayer optical memory and a hologram.

2. DESCRIPTION OF THE RELATED ART

As optical recording media that now or will be imminently put to practical use are known various optical recording media such as a CD-R, a DVD (Digital Versatile Disk), and a Blu-ray disk. However, a recording capacity of these optical recording media is around 27 GB at maximum, and it is requested a development of a higher recording capacity of an optical recording medium in order to handle a large capacity of information accompanied with a progress of a highly-networked information society in these years. Consequently, as the higher recording capacity of the optical recording medium is noticed such ones utilizing a holographic memory, a multilayer optical memory, and proximity field light, and a development thereof is being proceeded as next-generation optical recording media.

In an optical recording medium utilizing a hologram memory information is recorded not only in an in-plane direction but also in a depth direction of the optical recording medium. In other words, utilizing the in-plane direction of an optical information recording layer and the depth direction (thickness direction of the recording medium) of the optical information recording layer, the information is three-dimensionally recorded, and furthermore by performing a multi-recording at the same place, it is enabled to record a higher density and larger capacity of information. In addition, also in a multilayer optical memory the information is three-dimensionally recorded in the in-plane direction and depth direction of an optical information recording layer thereof.

In such the optical recording media where information is three-dimensionally recorded, because a recording is performed in a volumetric direction (in-plane and depth directions), an optical information recording layer formed of an optical recording material is thick and becomes about 1 mm (or more) in some cases.

Therefore, because in these optical recording media the optical information recording layer is thick, an area where a side edge portion thereof contacts outside air becomes larger, and according to an invasion of moisture and oxygen, there is a possibility of bringing about an moisture-absorption expansion and contraction of the optical information recording layer and a deterioration and reactivity lowering thereof due to an oxidation of an optical recording material in the vicinity of the side edge portion.

In addition, now in an optical recording medium by a hologram, a photopolymer becomes a prevailing candidate as an optical recording material for forming an optical information recording layer thereof. The photopolymer contains four components of a binder, a monomer, a polymerization initiator, and a sensitizing dye. However, many monomers are liquid with a high boiling point: when a comparatively thick optical information recording layer is formed with using the photopolymer as the optical recording material, it can occur that the material runs out of an edge of the optical information recording layer, the layer peels, and the monomer vaporizes and a recording characteristic thereof lowers.

Consequently, in JP 2001-5368A (claims 1 and 9, and FIG. 1) as shown in FIG. 5 are disclosed: an optical recording medium base body with a structure where two substrates 51, 52 are laminated through an outer perimeter spacer 53 and an inner perimeter spacer 54; and a method of manufacturing an optical recording medium having a comparatively thick optical information recording layer by filling a gel-like optical recording material in an inner space formed by the substrates 51, 52, the outer perimeter spacer 53, and the inner perimeter spacer 54. However, in the method, when a viscosity of an optical recording material used is higher, the filling is difficult; when a solvent is mixed with the optical recording material in order to lower the viscosity, it is foreseen that the removal of the solvent after the filling is difficult. In addition, because it is also difficult and costly to laminate the two substrates 51, 52 through the outer perimeter spacer 53 and the inner perimeter spacer 54 and to form a uniform thickness space between the substrates 51, 52, it is not realistic.

In addition, in "Information Strage Week 2004" (INTERNATIONAL DI SK FORUM, 2004, S1-55 (page 14), Kevin Curtis) it is also proposed a method of sandwiching an optical recording material between glass substrates, and between plastic substrates such as polycarbonate; curing part of the optical recording material by light irradiation or heating; and thus making an optical recording medium having a comparatively thick optical information recording layer. However, problems such as an invasion of moisture and oxygen at the side edge portion of the thick optical information recording layer and the run-out of the optical recording material are not considered.

Consequently, it is strongly requested an optical recording medium that solves the problems due to an invasion of moisture and oxygen at a side edge portion of a thicker optical information recording layer and a run-out of an optical recording material, and enables a stable recording and reproducing of information.

## SUMMARY OF THE INVENTION

An optical recording medium of the present invention is a lamination body comprising two-light transmissive substrates not less than 50 μm in thickness and an optical information recording layer not less than 100 μm in thickness that is provided between the two light transmissive substrates and is comprised of an optical recording material where information is recorded by recording light, wherein a side edge portion of the lamination body is covered so that edges of the light transmissive substrates and the optical information recording layer are not exposed.

In the present invention "recording light" means light radiated in an optical information recording layer in order to react or change an optical recording material for forming the optical information recording layer and to record information; for example, in an optical recording medium used in a recording and reproducing by hologram, "recording light" means reference light and object light. In addition, "light transmissive" means that a transmissivity of the recording light (reference light and object light) is at least not less than 80%.

In accordance with an optical recording medium of the present invention, in the medium comprised of a lamination body composed of two light transmissive substrates and an optical information recording layer provided between the substrates, it is enabled to prevent harmful effects due to an invasion of moisture, oxygen, and the like from a side edge portion of the lamination body, and such a leakage of an optical recording material from the side edge portion by covering the side edge portion of the lamination body and making edges of the two light transmissive substrates and the optical information recording layer not exposed,.

In addition, as a manufacturing method of the optical recording medium, the present invention provides the method comprising the processes of: forming a lamination body of a structure where an optical information recording layer is provided between two light transmissive substrates; and forming a protective film at a side edge portion of the lamination body.

In accordance with the manufacturing method it is enabled to easily manufacture the optical recording medium.

## BRIEF DESCRIPTION OF THE DRAWINGS

FIG. 1 is a perspective view showing an optical recording medium related to a first embodiment of the present invention.

FIG. 2 is a schematic section drawing showing a structure of the optical recording medium shown in FIG. 1.

FIG. 3A is a perspective view showing an optical recording medium related to a second embodiment of the present invention.

FIG. 3B is a schematic section drawing showing a structure of the optical recording medium shown in FIG. 3A.

FIG. 4 is a schematic drawing for illustrating a measurement method of a diffraction efficiency.

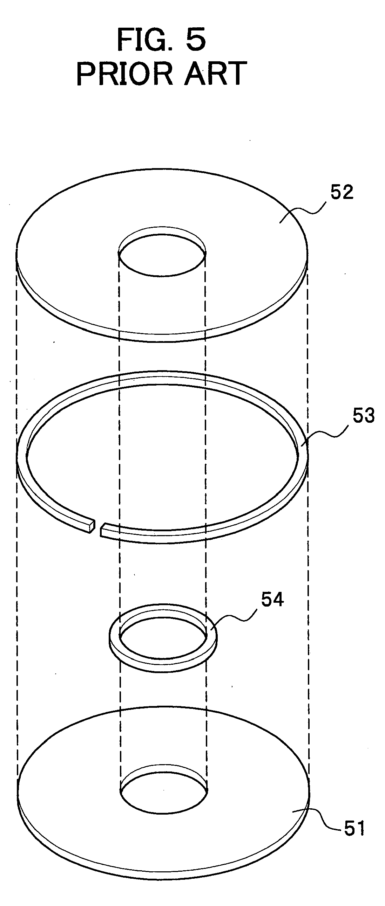

FIG. 5 is an exploded perspective view showing a structure example of a conventional optical recording medium.

## DESCRIPTION OF THE PREFERRED EMBODIMENTS

Here will be described embodiments of the present invention in detail, referring to drawings as needed.

FIG. 1 is a general perspective view showing an optical recording medium OM1 for a holographic recording related to a first embodiment of the present invention.

The optical recording medium OM1 shown in FIG. 1 comprises light transmissive substrates 1, 2, and an optical information recording layer 3 provided between the light transmissive substrates 1, 2 as a schematic section drawing shown in FIG. 2, and thus composed of a disc-form lamination body where a fitting hole 6 of a drive mechanism (not shown) for rotating the optical recording medium OM1 in recording and reproducing by hologram is drilled at center thereof. It is also available to appropriately provide a reflection layer, a thermal conduction layer, a servo signal recording layer, and the like. Then at a side edge portion of the lamination body, that is, at outer and inner perimeter edges, are respectively provided an outer perimeter protective film 4 and an inner perimeter protective film 5, and edges of the light transmissive substrates 1, 2, and the optical information recording layer 3 are covered. Meanwhile, in the lamination body composing the optical recording medium OM1 of the embodiment the outer and inner perimeter edges correspond to the side edge portion, and the outer perimeter protective film 4 and the inner perimeter protective film 5 correspond to the protective film in "SUMMARY OF THE INVENTION."

The light transmissive substrates 1, 2 are not specifically limited and composed of any of a film and sheet of a natural or synthetic organic resin: for example, an inorganic substance such as glass and organic synthetic resins such as a polycarbonate (hereinafter abbreviated as "PC"), triacetylcellulose (hereinafter abbreviated as "TAC"), cycloolefin polymer, polyethylene terephthalate (hereinafter abbreviated as "PET"), polyphenylene sulfide (hereinafter abbreviated as "PPS", acrylic resin, methacrylic resin, polystyrene resin, vinyl chloride resin, epoxy resin, polyester resin,

and amorphous polyolefin. Specifically, glass, PC, TAC, and the like are preferable because of a lower double refractivity. The light transmissive substrates 1, 2 may be formed of a same material, and of different materials. In addition, it is preferable that a reflection preventive coating is dispensed on surfaces of the light transmissive substrates 1, 2. Furthermore, it is also available to appropriately dispense an oxygen permeation preventive coating, a UV cut coating, and the like on the surfaces of the light transmissive substrates 1, 2.

In the light transmissive substrate 1 a reflection layer may be provided on a surface 1a (see FIG. 2) contacting the optical information recording layer 3, and it is preferable that the reflection layer is formed by sputtering elements such as Au, Ag, Al, Pt, Cu, Ni, Si, Ge, Cr, and the like independently or in combination.

In addition, the light transmissive substrates 1, 2 are comparative thick, not less than 50 μm in thickness from a view point of rigidity in handling, and preferably around 50 to 1500 μm in thickness.

Furthermore, on the surface 1a of the light transmissive substrate 1 contacting the optical information recording layer 3, it is available in advance to form a convex and concave pre-format pattern indicating information for performing servo control such as a tracking servo and a focus servo, and information for identifying an address of the optical information recording layer 3; and a servo signal recording area consisting of pits. Thus in a hologram memory it is accurately performed to form an interference pattern by interference of reference light and information light in the optical information recording layer 3, and it is enabled to accurately record optical information. In addition, in reproducing it is enabled to accurately reproduce optical information by reference light. The information recorded in the servo signal recording area is reproduced, using a laser not less than 600 nm not absorbed by an optical recording material composing the optical information recording layer 3. In addition, a protective layer for blocking oxygen may also be provided on the optical information recording layer 3.

The optical information recording layer 3 is formed of an optical recording material of which optical characteristics such as a refractivity, transmissivity, permittivity, reflectivity, and absorptivity change along light and shade of an interference pattern formed within the optical information recording layer 3 when recording light is radiated.

As concrete examples of the optical recording material can be cited a silver halide, a gelatin bichromate, a photorefractive material, a photochromic material, a photopolymer material, and the like. Out of these, the photopolymer material has advantages of being able to obtain a higher diffraction efficiency, being lower in noise, and being better in storage stability if completely fixed after recording; and therefore, a research and development thereof is made to proceed. The photopolymer material usually contains a binder, a polymerizing monomer, a sensitizing dye, a polymerization initiator, and the like. It is desirable to use the binder and polymerizing monomer having a different refractivity. If in recording optical information an interference pattern is formed within the optical information recording layer 3 of the optical recording medium OM1, the sensitizing dye is excited at a light portion of the interference pattern and emits electrons. The emitted electrons move to the polymerization initiator and generate radicals; and the radicals move to the polymerizing monomer, and thereby the polymerization is initiated. Some polymerizing monomers cause the polymerization by an acid generation agent. As the result, the photopolymer material becomes a configuration of the polymerizing monomer being rich at the light portion of the interference pattern and the binder being rich at the shade portion of the interference pattern, and a refractivity difference is recorded within the optical recording medium as an interference pattern. A polymerizing monomer not used for recording optical information is totally exposed and fixed, using a laser and a white light source after recording. In addition, depending on a material, some polymerizing monomers are fixed with a heat treatment.

The binder is preferably higher in transmissivity and lower in double refraction. As concrete examples of the binder can be cited chlorinated polyethylene, polymethylmethacrylate, a copolymer of methylmethacrylate and (meta) acrylate alkylester other than methylmethacrylate, a copolymer of vinyl chloride and acrylonitrile, polyvinyl acetate, polyvinyl alcohol, polyvinyl methylal, polyvinyl butyral, polyvinyl pyrrolidone, ethylcellulose, accetylcellulose, and polycarbonate.

In a case of the photopolymer material, because recording is performed by a difference between refractivities of a binder and a polymerizing monomer, the monomer having a refractivity adequate for the recording is used. A copolymer is not specifically limited if it has a polymerization group. For example, a radical polymerizing monomer or a cation polymerizing monomer or both polymerizing monomers may be simultaneously used, and to be more precise, compounds containing a polymerization group such as an epoxy group and an ethylene unsaturated group can be cited. A polymerizing monomer containing these polymerization groups not less than one in a molecule is used, and when containing these polymerization groups not less than two in the molecule, they may be different or same.

In addition, even substances other than the above can be used as the optical recording material if physicality of their raw material changes along light and shade of an interference pattern and such a refractivity difference and a transmission difference occur therein. In addition, combinations of these, for example, a dye colored or decolored by light radiation and a constituent containing a photopolymer, a photorefractive material and the constituent containing the photopolymer, and the like can be used as a hologram recording material.

As the sensitizing dye is used one having an absorption peak in a wavelength of recording light, and a light absorption efficiency ε of the dye itself is preferably lower in the wavelength of the recording light. As the sensitizing dye

can be used known organic dyes such as a cyan, merocyan, phthalocyan, azo, azomethine, indoaniline, xanthene, coumarin, polymethine, diarylethene, fulgide, fluorane, anthraquinone, and styryl.

Furthermore, the polymerization initiator is not specifically limited if it is thermally inactive at not more than 80 degrees Celsius and generates a proper free radical. In addition, in a case of using a polymerizing monomer of a cation polymerization, it is preferable to use an acid generation agent.

The optical recording material may appropriately contain something regularly used for forming an optical information recording layer of this kind of optical recording medium, such as a sensitizer, an optical brightening agent, an ultraviolet ray absorbing agent, a thermal stabilizer, a chain transfer agent, an elasticizer, and a coloring agent.

A thickness of the optical information recording layer 3 is not less than 100 μm, preferably 100 μm to 2 mm, and more preferably 500 μm to 1.5 mm. If the thickness is less than 100 μm, it becomes difficult to perform a higher recording density and higher capacity of a three-dimensional recording such as a hologram memory.

In addition, by covering the edges of the light transmissive substrates 1, 2, and the optical information recording layer 3, the side edge portion of the lamination body composing the optical recording medium OM1, that is, the outer perimeter protective film 4 and the inner perimeter protective film 5 provided at the outer and inner perimeter edges can prevent an moisture-absorption expansion and contraction of the layer 3 according to an invasion of moisture and oxygen from the side edge portion of the layer 3, of which thickness is comparatively thick, not less than 100 μm, and a deterioration and reactivity lowering due to an oxidation of an optical recording material in an inner vicinity of the side edge portion. In addition, by preventing a leakage of the optical recording material from the side edge of the optical information recording layer 3, a peel-off of the layer 3, and a lowering of a recording characteristic due to a vaporization of the monomer, it is enabled to stably record and reproduce information.

Although the outer perimeter protective film 4 and the inner perimeter protective film 5 (protective film) are not specifically limited if they are films that protect the edges of the light transmissive substrates 1, 2, and the optical information recording layer 3 and can prevent the invasion of moisture and oxygen from the side edge portion, the leakage of the optical recording material from the side edge portion, the peel-off of the layer 3, the vaporization of the monomer, and the like, it is preferable that the outer perimeter protective film 4 and the inner perimeter protective film 5 are formed of a film forming material such as a photopolymerizing resin and a heat-polymerizing resin because a formation of the protective film is easy.

As the photopolymerizing resin can be used such ultraviolet ray hardeners regularly used: for example, "SD-640" and "SD-347" manufactured by DAINIPPON INK AND CHEMICALS, INCORPORATED, and "SKCD1051" manufactured by SKC Co., and the like.

In addition, as the heat-polymerizing resin can be used a phenol resin, a urea resin, and an isocyanate resin, and the like.

In the present invention the protective film may independently use one kind of the photopolymerizing resin and the heat-polymerizing resin or may mix and use not less than two kinds thereof. In addition, the resins exemplified as the concrete examples of the binder can be used other than the photopolymerizing resin and the heat-polymerizing resin. In this case it is preferable that a refractivity of side edge portion of the optical recording medium OM1 and those of the light transmissive substrates 1, 2, and the optical information recording layer 3 are proximate values in order to properly maintain a light path of recording light in the substrates 1, 2 and the layer 3 when recording information in the layer 3 by recording light. For example, if when performing a recording by a refractivity difference in an optical recording medium of a hologram memory, there is an extremely different portion at a side edge thereof in refractivity, a reflection occurs at a portion where recording light should be transmitted in itself, and it badly influences a recording characteristic in an inner vicinity of the side edge. Consequently, it is better that the refractivity of the protective film is nearer to an average refractivity of the light transmissive substrates 1, 2 and the optical information recording layer 3. Accordingly, it is preferable that a refractivity nA of the outer perimeter protective film 4 and the inner perimeter protective film 5 (protective film) and a refractivity nB of the light transmissive substrates 1, 2 are $0.8 \leq nA/nB \leq 1.2$. In addition, it is preferable that the nA of the outer perimeter protective film 4 and the inner perimeter protective film 5 (protective film) and an average refractivity nC of the optical information recording layer 3 are $0.8 \leq nA/nC \leq 1.2$.

In addition, from a view point of enabling a recording of stable optical information, it is effective to block an invasion of undesirable light from the side edge portion and to suppress an undesirable exposure. For example, although because an optical recording material used in a hologram optical recording medium is extremely high in sensitivity, it is desirable that this kind of the optical recording medium is usually housed in a light shield cartridge, a structure of the cartridge is usually comprised of some portions, and therefore, it is difficult to make light leaking from a gap zero. Consequently, if because the side edge portion of the optical recording medium OM1 is a portion where the edges of the light transmissive substrates 1, 2, and the optical information recording layer 3 are exposed, light invades from the portion, there is a possibility that the optical recording material results in being exposed by invasion light. In addition, in order to block an invasion of light from the side edge portion and to suppress an undesirable exposure to the minimum, it is preferable that the outer perimeter protective film 4 and the inner perimeter protective film 5 (protective film) contain any of a dye and a pigment for absorbing the recording light.

As the dye, for example, can be used known organic ones such as a cyanine, phthalocyanine, naphthalocyanine, azo, anthraquinone, naphthoquinone, pyrylium, azulenium, squarylium, indophenol indoaniline, and triaryl methane. These dyes may be used independently in one kind or not less than two in combination.

As the pigment, for example, can be cited non-magnetic inorganic compounds such as metal oxides, metal carbonates, metal sulfates, metal nitrides, metal carbides, and metal sulfides; melamine resins; benzoguanamine resins; and the like. As concrete examples of the inorganic compounds can be cited $\alpha$ -aluminas with $\alpha$ ratio not less than 90%, $\beta$ -aluminas, $\gamma$ -aluminas, $\theta$ -aluminas, silicon carbides, chrome oxides, cerium oxides, $\alpha$ -iron oxides, hematite, goethite, corundum, silicon nitrides, titan oxides, silicon dioxides, tin oxides, magnesium oxides, tungsten oxides, zirconium oxides, boron nitrides, zinc oxides, calcium carbonates, calcium sulfates, barium sulfates, molybdenum disulfides, indium oxides, carbon black, ITO (tin oxide-indium oxide), and the like. These pigments can be used independently in one kind or not less than two in combination.

Furthermore, a thickness of the outer perimeter protective film 4 and the inner perimeter protective film 5 (protective film) is usually 10 nm to 5 mm.

Although the optical recording medium OM1 of the first embodiment is an example of a rotational disc-form optical recording medium, the optical recording medium of the present invention is not limited to the first embodiment, various forms such as a card form, a small chip form, and a cuboid form are also available. For example, as a second embodiment shown in FIGS. 3A and 3B can be cited a card-form optical recording medium OM2 comprising: a structure where a light transmissive substrate 1', an optical information recording layer 3' (not shown), and a light transmissive substrate 2' are laminated in this order; and an outer perimeter protective film 4' at an outer perimeter side edge of a lamination body comprising the substrates 1', 2', and the layer 3'. Also in the optical recording medium OM2 may be provided such a reflection layer between the light transmissive substrate 1' and the optical information recording layer 3', and a protective layer between the layer 3' and the light transmissive substrate 2'.

Although the first and second embodiments are described with making it examples an optical recording medium for a holographic recording, the present invention is not limited to the optical recording medium for the holographic recording; the invention is applicable to other three-dimensional optical recording media, for example, various optical recording media such as an optical recording medium by multilayer optical memory using two-photon absorption and the like. Furthermore, the present invention can also be used as a security card and an imaging medium, and the embodiments can be applied in making the card, the medium, and the like.

The optical recording media OM1 and OM2 can be manufactured by forming each lamination body of a structure where the optical information recording layers 3, 3' is respectively provided between the respective two light transmissive substrates 1 and 2, and 1' and 2', and further forming the protective film (both of the outer perimeter protective film 4 and inner perimeter protective film 5 or the outer perimeter protective film 4') at the side edge portion (the outer perimeter edge and inner perimeter edge of the optical recording medium OM1 or the outer perimeter edge of the optical recording medium OM2) of the lamination body. For example, it can be cited a method comprising the processes of: coating an optical recording material on one face of the light transmissive substrate 1 (1'), and forming the optical information recording layer 3 (3'); laminating another light transmissive substrate 2 (2') on the layer 3 (3'); and forming the protective film at the side edge portion of the lamination body of the structure where the layer 3 (3') is sandwiched between the two light transmissive substrates 1, 2 (1', 2'). The substrates 1, 2 (1', 2') are formed into a predetermined form in advance, the optical information recording layer 3 (3') is formed on one face of the light transmissive substrate 1 (1'), and then, by laminating the light transmissive substrate 2 (2'), an optical recording medium of a predetermined form can also be manufactured; otherwise, after the optical information recording layer 3 (3') is formed between the light transmissive substrates 1, 2 (1', 2'), an optical recording medium is formed into a predetermined form by methods such as punching and cutting. An optical recording medium is formed into a predetermined form such as a disc form (the optical recording medium OM1) and a card form (the optical recording medium OM2). Furthermore, by forming the protective film (both of the outer perimeter protective film 4 and inner perimeter protective film 5 or the outer perimeter protective film 4') at the side edge portion (the outer perimeter edge and inner perimeter edge of the optical recording medium OM1 or the outer perimeter edge of the optical recording medium OM2) of the lamination body of the structure where the optical information recording layer 3 (3') is provided between the two light transmissive substrates 1, 2 (1', 2'), the optical recording media OM1 and OM2 can also be manufactured.

The process of forming the optical information recording layer 3 (3') on the light transmissive substrate 1 (1') can be performed by drying and forming the layer 3 (3') after coating or forming an embrocation containing an optical recording material with a predetermined thickness on the substrate 1 (1'). In addition, the process of forming the optical information recording layer 3 (3') may also be performed by repeating the process of coating and drying the embrocation containing the optical recording material on the light transmissive substrate 1 (1'), and by forming a predetermined thickness of the optical information recording layer 3 (3'). In addition, in a case of not using a solvent for forming the optical information recording layer 3 (3'), the embrocation containing the optical recording material is coated or formed on the light transmissive substrate 1 (1'), and then the optical information recording layer 3 (3') can be formed as it is without drying.

An embrocation containing an optical recording material can be adjusted by mixing the optical recording material and other components blended as needed, adding a solvent, and stirring them. It is preferable to adjust the embrocation under a darkroom lighting such as a red lamp in order to prevent the optical recording material from hardening.

As a solvent to be used, if it sufficiently dissolves an optical recording material used and gives a good film property, it is not specifically limited, and for example, followings can be cited: cello solve solvents such as a methylcello solve, ethylcello solve, methyl cellosolve acetate, and ethyl cellosolve acetate; propylene glycol solvents such as a propylene glycol mono methyl ether, propylene glycol mono ethyl ether, propylene glycol mono butyl ether, propylene glycol mono methyl ether acetate, propylene glycol mono ethyl ether acetate, propylene glycol mono butyl ether acetate, and dipropylene glycol dimethyl ether; ester solvents such as a butyl acetate, amyl acetate, ethyl acetate, butyl acetate, diethyl oxalate, ethyl pyruvate, ethyl-2-hydroxybutyrate, ethyl acetoacetate, methyl lactate, and methyl 3-methoxypropionate; alcohol solvents such as a butanol, heptanol, hexanol, diacetone alcohol, and furfuryl alcohol; ketone solvents such as a methyl isobutyl ketone, dimethyl ketone, cyclohexanone, methyl amyl ketone, and methyl ethyl ketone; high polarity solvents such as a dimethylformamide, dimethylacetoamide, N-methyl pyrrolidone; and mixed solvents of the above; and further cyanide hydrocarbons such as an acetonitrile; and something where aromatic hydrocarbons are added to the above. In addition, other than these can also be used halogen hydrocarbon solvents, for example, dichloromethane, trichloromethane, and the like. A ratio of solvents is usually within a range of around 10 to 90 folds by weight ratio for a total amount of the optical recording material. The solvents are preferably not more than 100 degrees Celsius in boiling point.

In addition, although a viscosity of an embrocation is appropriately adjusted by a coating method used, it is usually around 0.1 to 50 Ps.

A coating method of an embrocation onto the light transmissive substrate 1 (1') can be performed by a dip coat method, coater, rod, coil bar, extrusion coat, blade instrument, spin coat, and the like. Particularly, in order to obtain a uniform and thicker optical information recording layer, a coating method using the coil bar or the rod is preferable.

In addition, a formation of the protective film (the outer perimeter protective film 4 and inner perimeter protective film 5 of the optical recording medium OM1 or the outer perimeter protective film 4' of the optical recording medium OM2) can be performed by coating an embrocation containing a film forming material such the light-polymerizing resin and the heat-polymerizing resin and, if necessary, the dye and the pigment, at the side edge portion (the outer and inner perimeter edges of the OM1 and the outer perimeter edge of the optical recording medium OM2), and by hardening the film forming material. In addition, in a case of using resins other than the light-polymerizing resin and the heat-polymerizing resin, the protective film can be formed by drying a solvent of a resin solution.

[Example]

Here will be concretely described the present invention according to examples of the invention and comparison examples.

<Example 1>

<<Adjustment of Embrocation A>>

A binder, a monomer, polymerization inhibitors (contained in the monomer), a sensitizing dye, and a polymerization initiator were checkweighed under a red lamp, were put in a brown eggplant-shape flask, dichloromethane was further put in as a solvent, they were stirred for three hours, using a stirrer, and thus an embrocation A containing prescribed optical recording materials shown in Table 1 below was obtained. A viscosity of the embrocation A was 21 Ps.

Table 1

| | Material | Mass Ratio |
|---|---|---|
| Binder | CAB531-1 | 1000 |
| Monomer | POEA | 920 |
| Polymerisation Inhibitor | MEHQ | 0.276 |
| Sensitizing Dye | DEAW | 0.56 |
| Polymerisation Initiator | MBO | 36 |
| | o-CL-HABI | 24 |
| Solvent | Dichloromethane | 6240 |

NB: CAB531-1, Cellulose-Acetate-Butylate (manufactured by Eastman Chemical Co.);
POEA, Acrylic Acid 2-Phenoxyetyl (Cas No. 48145-04-6);
MEHQ, 4-Methoxyphenol (Cas No. 150-76-5);
DEAW, Cyclopentanone-2, 5-bis((4-(Diethyl Amino) Phenyl) Methylene) (Cas No. 38394-53-5);
MBO, 2-Melcaptobenzoxazole (Cas No. 2382-96-9); and
o-CL-HABI, 2, 2-bis(o-Chlorophenyl)-4, 4, 5, 5-Tetoraphenyl-1, 1-Biimidazole (Cas No. 1707-68-2).

The embrocation A was coated on a transparent substrate (polycarbonate, thickness 80 μm) with using a coater of a clearance of 100 μm (gap length), and was dried for three minutes at 40 degrees Celsius. Furthermore, subsequently, a process of coating and drying the embrocation A was repeated twice, and thus an optical information recording layer of a total thickness of 120 μm was formed on the transparent substrate. Then an optical recording lamination body was obtained. Then, a glass substrate (thickness, 1 mm) was laminated on the optical information recording layer.

Next, a dichloromethane solution containing the binder (CAB531-1) of 20 mass % was adjusted, and using a brush, the solution was coated at edges of the transparent substrate, the optical information recording layer, and the glass substrate; then a coating treatment thereof was performed, and a sample of an optical recording medium was made.

<Example 2>

<<Adjustment of Embrocation B>>

A binder, a dye decolored by acid, an acid generation agent, and a sensitizing dye were checkweighed under a red lamp, were put in a brown eggplant-shape flask, a solvent further was put in, they were stirred for three hours, using a stirrer, and thus an embrocation B containing prescribed optical recording materials shown in Table 2 below was obtained.

Table 2

| | Material | Mass Ratio |
|---|---|---|
| Binder | PMMA | 1000 |
| Dye decolored by acid | Dye A | 80 |
| Acid Generation Agent | Acid Generation Agent A | 500 |
| Sensitizing Dye | Dye B | 80 |
| Solvent | Methylene Chloride | 3250 |
| Solvent | Acetonitrile | 1052.5 |

NB: PMMA, Polymethylmethacrylate (manufactured by Aldrich Inc. Mw: 996000);
Dye A, a quaternary ammonium salt expressed in a formula (a) below;
Acid Generation Agent A, Diphenyliodonium-Hexafluorophosphate (Cas No. 58109-40-3); and
Dye B, Ru complex compound expressed in a formula (b) below.

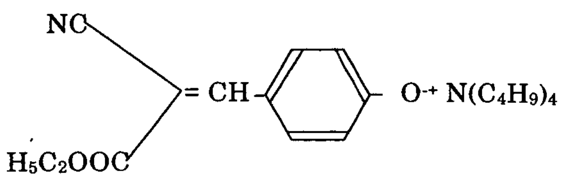
(a)

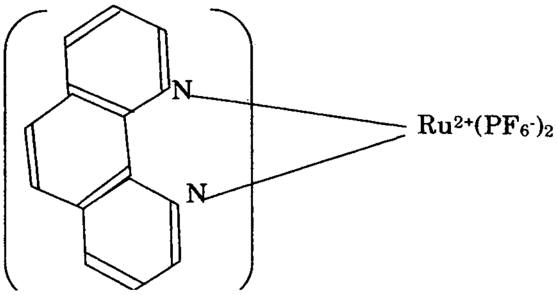

(b)

The embrocation B was coated on a transparent substrate (polycarbonate, thickness 80 μm) with using a coater of a clearance of 300 μm (gap length). Subsequently, a process of coating and drying the embrocation B was repeated twice, and an optical information recording layer was formed on the transparent substrate. Then a glass substrate (thickness, 1 mm) was laminated on the optical information recording layer. Next, a dichloromethane solution containing the binder (PMMA) of 20 mass % was adjusted, and using a brush, the solution was coated at edges of the transparent substrate, the optical information recording layer, and the glass substrate; then a coating treatment thereof was performed, and a sample of an optical recording medium was made.

In the optical information recording layer formed by the embrocation B the sensitizing dye A is excited at a light portion of an interference pattern, and electrons are emitted from the excited dye A. The emitted electrons move to the acid generation agent, and an acid is generated by the acid generation agent. By the acid the dye B (dye decolored by acid) different from the sensitizing dye A is decolored, and thereby a refractivity of the optical information recording layer changes. Thus, by decoloring the dye B at the light portion of the interference pattern, a refractivity modulation occurs and a hologram is recorded.

<Comparison Example 1>

A sample of an optical recording medium was made same as in the example 1 except that the coating treatment of the edges was not performed.

<Comparison Example 2>

A sample of an optical recording medium was made same as in the example 2 except that the coating treatment of the edges was not performed.

<Evaluation>

With respect to the samples of the optical recording media obtained in the examples 1 and 2 and the comparison examples 1 and 2, thicknesses of the optical information recording layers and diffraction efficiencies before/after light shield storage were measured according to a method below. A result is shown in Table 3.

<<Diffraction Efficiency>>

Respective diffraction efficiencies were measured for the optical recording medium samples just after their making and those after storage for three days with light shielded.

As shown in FIG. 4 was performed a recording on an obverse A of an optical recording medium 36 (sample) at an incident angle of 15 degrees, with a spot diameter of 8 mm, a power output of 3 mW per beam, and a recording energy of 2000 mJ/cm$^2$, using a wavelength of 532 nm of a YAG laser light L1 radiated on the obverse A of the medium 36 from a YAG laser source 31 through an object lens 32, a lens 33, a beam slitter 34, and a mirror 35.

Next was radiated a wavelength of 632.8 nm of a He-Ne laser light L2 on a reverse B of the optical recording medium 36 at an incident angle of 18 degrees from a He-Ne laser source 38 through mirrors 39 and 40, and was observed a change of a diffraction efficiency for an exposure amount. At this time, the diffraction efficiency was obtained according to a below formula from a diffraction light amount of the He-Ne laser measured by a power meter 41 provided at a side of the obverse A of the optical recording medium 36 and an incident light amount (outgoing light amount from the He-Ne laser source 38) of the He-Ne laser entering the reverse B of the medium 36:

$$\text{Diffraction efficiency (\%)} = \text{a diffraction light amount /an incident light amount} \times 100.$$

<<Thickness of Optical Information Recording Layer>>

Each total thickness of the optical information recording layers was measured, using DIGITAL MICROMETER manufactured by SONY CO.

Table 3

| | Example 1 | Example 2 | Comparison Example 1 | Comparison Example 2 |
|---|---|---|---|---|
| Embrocation | A | B | B | A |
| Light Transmissive Substrate | PC | PC | PC | PC |
| Edge Treatment | With | With | Without | Without |
| Time till Measurement of Optical Recording Medium from its making | 72 | 72 | 72 | 72 |
| Thickness of Optical Recording Material Layer (μm) | 120 | 121 | 120 | 122 |
| Diffraction Efficiency (%) | 30 | 20 | 5 | 3 |

As shown in Table 3, in the example 1 the sample after storage with light shielded indicates a diffraction efficiency of about 30% same as before the storage. In addition, the sample of the example 2 indicates a diffraction efficiency of about 20% after storage with light shielded same as before the storage. On the other hand, the sample of the comparison example 1 of which side edge portion do not have the protective film indicates a diffraction efficiency of about 5% after storage with light shielded, and is confirmed that the diffraction efficiency is lowered, compared to the example 1. It is thought because the diffraction efficiency is lowered due to a vaporization of a non-reaction monomer from the side edge portion. In addition, the sample of the comparison example 2 indicates a diffraction efficiency of about 3% after storage with light shielded, and is confirmed that the diffraction efficiency is lowered, compared to the example 2. It is thought because the dye B reacts with moisture and carbon dioxide in the air at the edges and is decolored.

Thus, although the embodiments of the present invention are described, the invention is not limited thereto and various variations are available without departing from the spirit and scope of the invention.

## Claims

**1.** An optical recording medium (OM1 or OM2) comprising:

a lamination body, said body comprising:

two light transmissive substrates (1 and 2 or 1' and 2') not less than 50 μm in thickness; and
an optical information recording layer (3 or 3') not less than 100 μm in thickness, said layer comprising an optical recording material provided between said two light transmissive substrates, wherein information is recorded by recording light,

wherein a side edge portion of said lamination body is covered so that edges of said light transmissive substrates and said optical information recording layer are not exposed.

**2.** An optical recording medium according to claim 1 that comprises a protective film (4 and 5 or 4') at said side edge portion.

**3.** An optical recording medium according to claim 2, wherein said protective film is formed of any of a light-polymerizing resin and a heat-polymerizing resin.

**4.** An optical recording medium according to either claim 2 or claim 3, wherein for a refractivity nB of said light transmissive substrates, a refractivity nA of said protective film is $0.8 \leq nA/nB \leq 1.2$.

**5.** An optical recording medium according to either claim 2 or claim 3, wherein for a refractivity nC of an average refractivity nC of an optical information recording layer, a refractivity nA of said protective film is $0.8 \leq nA/nC \leq 1.2$.

**6.** An optical recording medium according to any of claims 2 to 5, wherein for a refractivity nC of an average refractivity nC of an optical information recording layer, a refractivity nA of said protective film is $0.8 \leq nA/nC \leq 1.2$.

**7.** A manufacturing method of an optical recording medium according to any of claims 1 to 6, the method comprising the processes of:

forming a lamination body of a structure where an optical information recording layer is provided between two light transmissive substrates; and
forming a protective film at a side edge portion of said lamination body.

FIG. 1

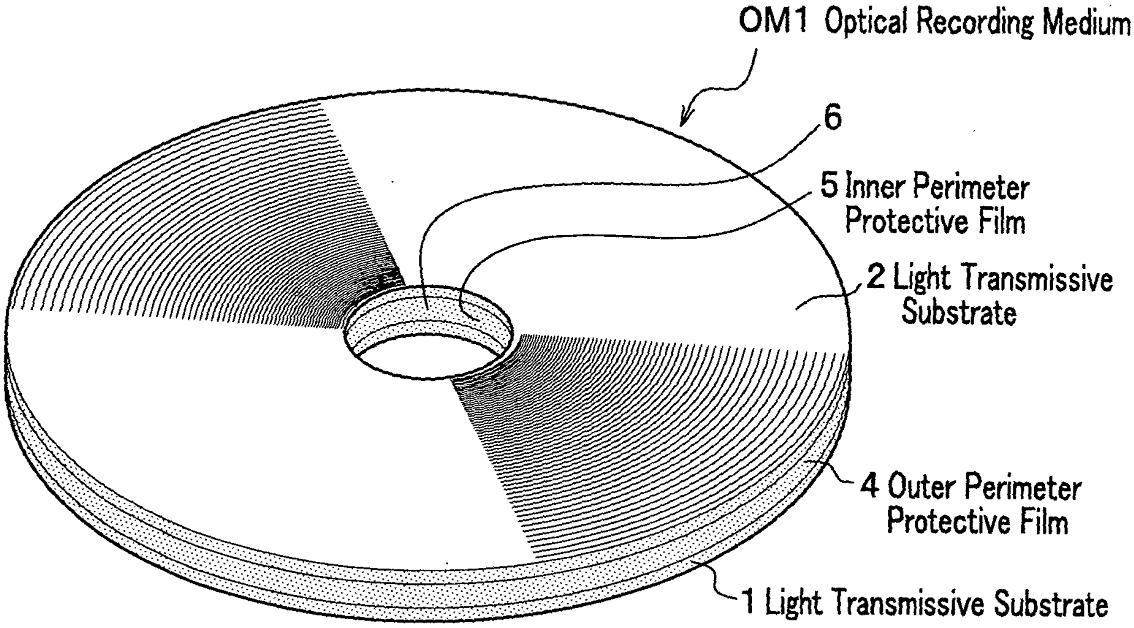
OM1 Optical Recording Medium
6
5 Inner Perimeter Protective Film
2 Light Transmissive Substrate
4 Outer Perimeter Protective Film
1 Light Transmissive Substrate

FIG. 2

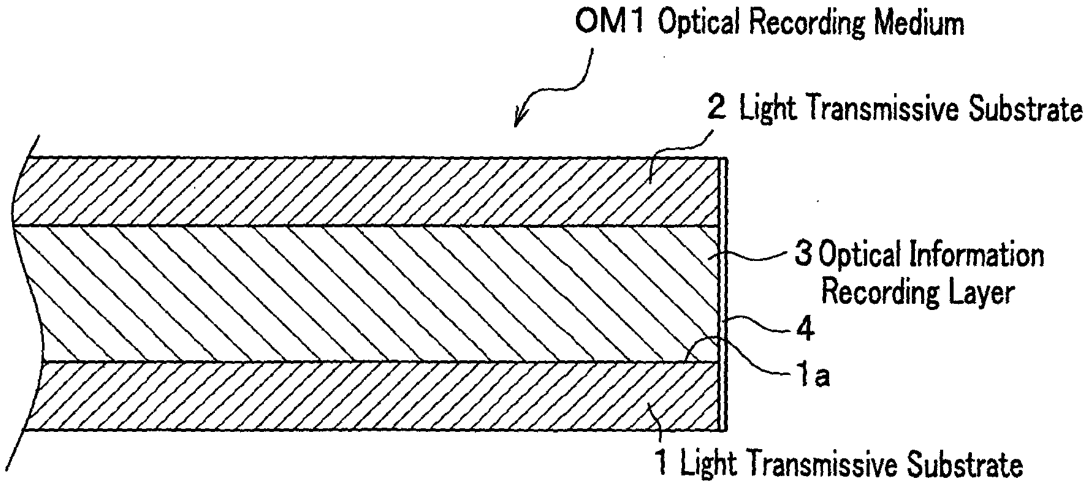
OM1 Optical Recording Medium
2 Light Transmissive Substrate
3 Optical Information Recording Layer
4
1a
1 Light Transmissive Substrate

FIG. 3A

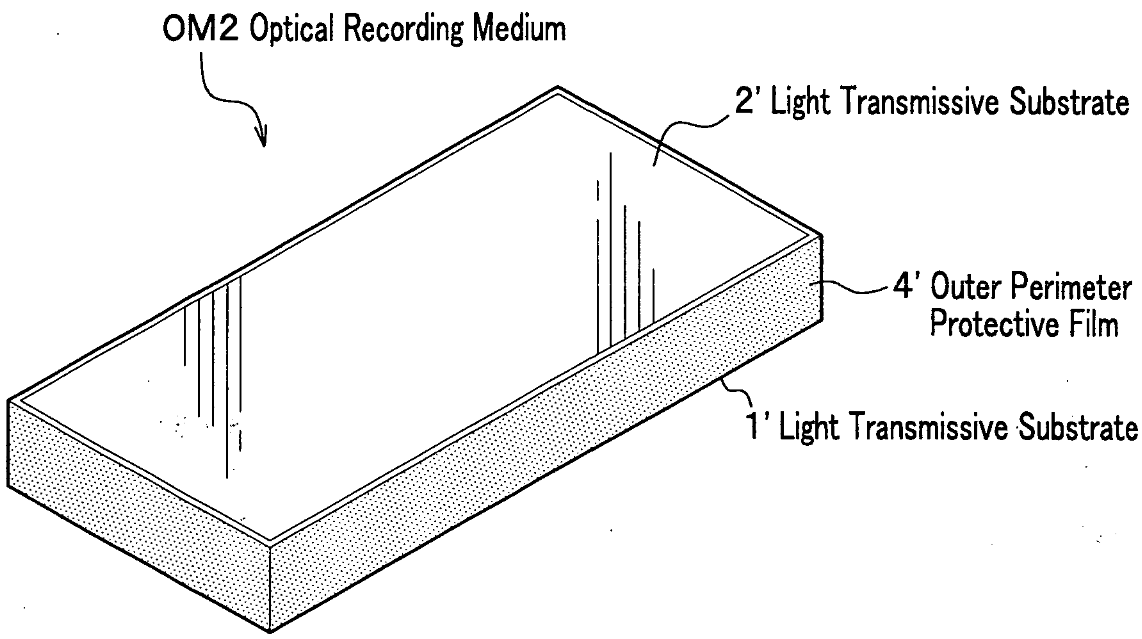
OM2 Optical Recording Medium
2' Light Transmissive Substrate
4' Outer Perimeter Protective Film
1' Light Transmissive Substrate

FIG. 3B

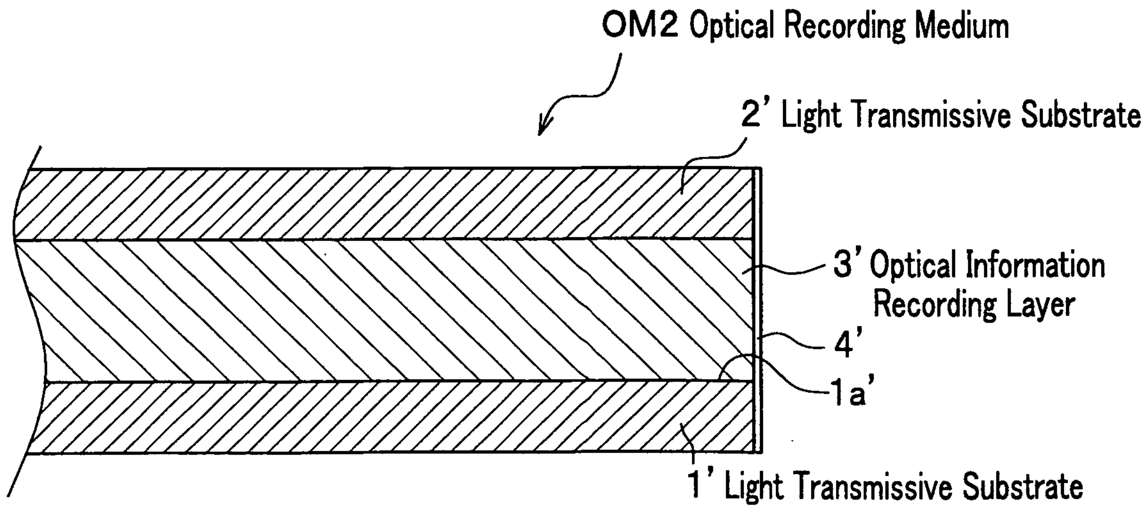
OM2 Optical Recording Medium
2' Light Transmissive Substrate
3' Optical Information Recording Layer
4'
1a'
1' Light Transmissive Substrate

FIG. 4

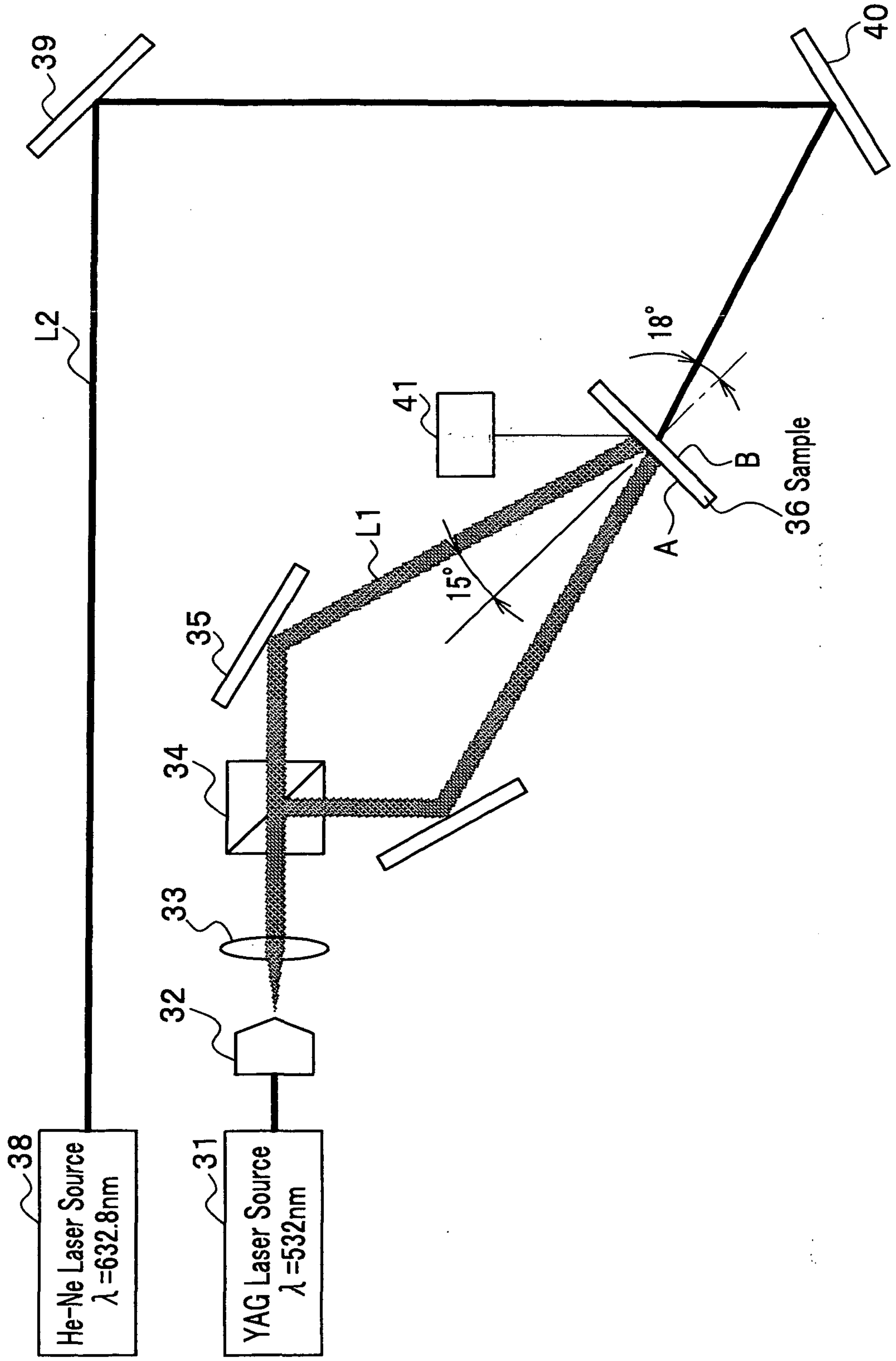
39
40
L2
18°
41
B
36 Sample
A
L1
15°
35
34
33
32
38
He-Ne Laser Source
λ =632.8nm
31
YAG Laser Source
λ =532nm

FIG. 5
PRIOR ART